Europäisches Patentamt

European Patent Office

Office européen des brevets

(19)

(11)     EP 1 035 942 B1

(12)     EUROPÄISCHE PATENTSCHRIFT

(45) Veröffentlichungstag und Bekanntmachung des
Hinweises auf die Patenterteilung:
**28.08.2002   Patentblatt 2002/35**

(51) Int Cl.⁷: **B23K 31/02**

(21) Anmeldenummer: **98961256.9**

(22) Anmeldetag: **07.12.1998**

(86) Internationale Anmeldenummer:
**PCT/EP98/07938**

(87) Internationale Veröffentlichungsnummer:
**WO 99/029464 (17.06.1999 Gazette 1999/24)**

(54) **VERFAHREN ZUM HERSTELLEN VON SÄGEBÄNDERN**

METHOD FOR PRODUCING SAW BANDS

PROCEDE DE PRODUCTION DE RUBANS DE SCIE

(84) Benannte Vertragsstaaten:
**AT DE GB SE**

(30) Priorität: **05.12.1997   DE 19753952**

(43) Veröffentlichungstag der Anmeldung:
**20.09.2000   Patentblatt 2000/38**

(73) Patentinhaber: **Stahlwerk Ergste Westig GmbH**
**58239 Schwerte (DE)**

(72) Erfinder:
• **OSING, Heinz-Jürgen**
**D-58636 Iserlohn (DE)**
• **LENOIR, Werner**
**D-59432 Unna (DE)**
• **JÄNSCH, Christoph**
**D-59174 Kamen (DE)**
• **ROZSNOKI, Laszlo**
**D-52064 Aachen (DE)**
• **PACHER, Oskar**
**A-8041 Graz (AT)**

(74) Vertreter: **König, Reimar, Dr.-Ing.**
**König-Palgen-Schumacher-Kluin**
**Patentanwälte**
**Postfach 11 09 46**
**40509 Düsseldorf (DE)**

(56) Entgegenhaltungen:
**DE-A- 19 501 442          US-A- 3 766 808**
**US-A- 4 144 777**

## Beschreibung

Die Erfindung bezieht sich auf ein Verfahren zum Herstellen von Sägebändern und Sägeblättern, insbesondere von Bandsägeblättern für Plan-, Kontur-, Gehrungs- und Trennschnitte.

Sägebänder und Sägeblätter müssen eine hohe Formbeständigkeit ihrer Schneidkanten sowie eine hohe Verschleißfestigkeit besitzen und der hohen Beanspruchung durch Druck-, Biege- und Schubkräfte auch bei den nicht unerheblichen Temperaturen gewachsen sein, die sich aus der Reibung zwischen Sägeblatt und Schneidgut ergibt. Dies gilt namentlich für Bandsägeblätter, die mit hoher Geschwindigkeit umlaufen und beim Umlenken einer starken Krümmung unterliegen.

Da es schwierig ist, die vorerwähnten Eigenschaften in einem einzigen Werkstoff zu vereinigen, bestehen Sägeblattrohlinge heutzutage üblicherweise aus einem verhältnismäßig zähen Trägerband mit hoher Biegewechselfestigkeit und einem Schneidenband aus einem Schnellarbeits- oder Kaltarbeitsstahl mit geringerer Zähigkeit, aber hoher Verschleißfestigkeit. Das Schneidenband ist dabei so breit, daß sich daraus zumindest die Zahnspitzen des Sägebandes oder -blattes oder auch die Schneidzähne insgesamt herausarbeiten lassen.

Es ist bekannt, das Träger- und das Schneidenband durch Laser- oder Elektronenstrahlschweißen ohne Zusatzwerkstoff miteinander zu verbinden. Aus dem auf diese Weise hergestellten Bimetall-Rohling werden nach einem Glühen zum Beseitigen von Schweißspannungen auf der Schneidenseite die Zähne herausgearbeitet. Dabei werden die Zähne durch Schränken abwechselnd nach der einen und nach der anderen Seite mehr oder minder stark aus der Ebene des Bandes abgebogen. Dem Schränken schließt sich ein abschließendes Austenetisierungsglühen mit einem Wasserabschrecken und einem gegebenenfalls mehrmaligen Anlassen zum Einstellen der Verschleißfestigkeit der Zähne bzw. Zahnspitzen an.

In der Praxis hat sich gezeigt, daß es bei der Wärmebehandlung häufig zu einem Verzug der Zähne bzw. der Zahnspitzen kommt, so daß diese nicht mehr die vorgesehene Winkellage in bezug auf die Sägeband- bzw. Sägeblattebene einnehmen und demzufolge einem wesentlich stärkeren Verschleiß unterliegen. Als Ursache hierfür konnten örtliche Konzentrationsunterschiede im Bereich der Schweißnaht festgestellt werden. Derartige Konzentrationsunterschiede und insbesondere der sich beim Verschweißen zweier unterschiedlich zusammengesetzter Werkstoffe zwangsläufig ergebende Konzentrationsgradient quer zur Schweißnaht führen häufig zu Restspannungen und damit zu einer Beeinträchtigung der Lebensdauer. Hinzukommt, daß es bei der abschließenden Wärmebehandlung mit ihren zum Teil schroffen Temperaturwechseln, insbesondere beim Abschrecken im Bereich der Schweißnaht bzw. des Übergangs von dem einen zum anderen Werkstoff häufig zu hohen lokalen inneren Spannungen kommt, die zu einer Rißbildung und infolge der durch die hohen Biegekräfte bedingten Rißausbreitung ebenfalls die Lebensdauer beeinträchtigen.

Um die Schweißbarkeit zu verbessern, schlägt die österreichische Patentschrift 398 176 die Verwendung einer Schneidstahllegierung mit 0,7 bis 2,3% Kohlenstoff, 0,08 bis 2,0% Aluminium und 0,7 bis 6,5% Vanadium sowie eines Trägerstahls mit 0,15 bis 0,50% Kohlenstoff, 0,015 bis 0,18% Aluminium und 0,10 bis 0,6% Vanadium vor. Mit den verhältnismäßig hohen Gehalten der Schneidstahllegierung an Kohlenstoff und Aluminium und der gleichzeitigen Anwesenheit von Vanadium soll das Umwandlungsverhalten derart beeinflußt werden, daß höhere Anlaßtemperaturen und demgemäß eine höhere Sekundärhärte und Verschleißfestigkeit möglich sind. Der verhältnismäßig hohe Aluminiumgehalt soll dabei höhere Kohlenstoffgehalte ohne die Gefahr einer Grafitausscheidung und demgemäß einen höheren Karbidanteil mit entsprechend höherer Verschleißbeständigkeit gewährleisten.

Des weiteren ist aus der US-Patentschrift 3 034 379 der Vorschlag bekannt, zwischen dem Schneidenstahlband und dem Trägerband einen dünnen Streifen aus einem hitzebeständigen Stahl mit hoher Härte und geringer Wärmeleitfähigkeit, beispielsweise aus einem austenitischen Stahl mit mindestens 12% Chrom anzuordnen. Diese Verfahrensweise ist jedoch sehr aufwendig, weil es nicht nur ein präzises Einfügen des Zwischenstreifens, sondern auch zwei Schweißnähte erfordert. Außerdem führt das Verschweißen dreier unterschiedlich zusammengesetzter Werkstoffe zu noch größeren Konzentrationsunterschieden mit den oben im Zusammenhang mit dem Herstellen von Bi-Metall-Rohlingen erörterten nachteiligen Folgen.

Der Erfindung liegt daher das Problem zugrunde, einen Weg zu finden, um die nachteiligen Inhomogenitäten im Bereich der Schweißnaht zu beseitigen und auf diese Weise die Lebensdauer der Sägebänder und -blätter zu erhöhen.

Die Lösung dieses Problems besteht in einem Verfahren, bei dem ein Trägerband aus einem verhältnismäßig zähen, insbesondere biegewechselfesten Stahl und einem Schneidstahlband oder -blatt aus einem Schnellarbeitsstahl miteinander verschweißt und dabei die Schweißnaht auf ein Verhältnis ihrer mittleren Breite zur Banddicke von

$$B_m/D = 0,30 \text{ bis } 0,9$$

eingestellt wird.

Nach dem erfindungsgemäßen Verfahren hergestellte Sägebänder und -blätter zeichnen sich durch eine hohe Formbeständigkeit und Schränkstabilität aus, d.h. die Sägezähne verbleiben trotz hoher Belastung und hoher Arbeitstemperaturen in ihrer vorgesehenen Lage; ihr Verschleiß ist daher vergleichsweise gering.

Der Trägerbandstahl enthält vorzugsweise 0,2 bis 0,6% Kohlenstoff, 0,5 bis 6%, vorzugsweise höchstens 1,5% Chrom sowie bis 3,5% Wolfram, Molybdän und Vanadium einzeln oder nebeneinander, vorzugsweise 1,5 bis 2,5% Molybdän und 0,10 bis 0,75% Vanadium, wenngleich sich Kohlenstoffgehalte von mindestens 0,4% oder auch von 0,45 bis 0,55%, vorzugsweise 0,35% besonders bewährt haben. Der Gesamtgehalt an Legierungsmitteln beträgt vorzugsweise 3,12 bis 8,48%.

Besonders geeignet ist ein Trägerbandstahl mit 0,32% Kohlenstoff, 0,35% Silizium, 0,70% Mangan, 1,00% Chrom, 2,00% Molybdän, 0,6% Nickel, 0,15% Vanadium und 0,05% Wolfram, Rest Eisen.

Die Erfindung basiert auf der Erkenntnis, daß der Schweißnahtgeometrie im Hinblick auf die Lebensdauer der Sägebänder und -blätter eine entscheidende Bedeutung zukommt.

Die Praxis hat bislang im Hinblick auf einen möglichst geringen Anteil an Schneidstahl mit verhältnismäßig schmalen Schweißnähten in der Größenordnung von 0,25 mm gearbeitet und dabei der Banddicke nicht die notwendige Aufmerksamkeit geschenkt. Geringe Schweißnahtbreiten sind nämlich zwangsläufig mit einem entsprechend geringen Wärmeeinbringen beim Schweißen und einer ebenso geringen Menge an flüssiger Phase beider aneinander grenzender Werkstoffe verbunden. Da die Durchmischung der beiden artfremden Werkstoffe im wesentlichen im Wege einer Diffusion geschieht und die Diffusion sowohl zeitals auch temperaturabhängig ist, kommt es bei den herkömmlichen Schweißverfahren in aller Regel in der flüssigen Phase nicht zu einer hinreichenden Durchmischung und demgemäß auch nicht zu einer sanften bzw. stetigen Konzentrationsänderung im Bereich des Übergangs vom einen zum anderen Werkstoff. Dieser Nachteil ist um so gravierender, je dicker die beiden miteinander zu verschweißenden Bänder sind; denn die verhältnismäßig große und mit der Banddicke zunehmende Masse der der Schweißnaht auf beiden Seiten benachbarten kalten Werkstoffe übt eine starke Abschreckwirkung auf die Schweiße aus und führt zu sehr steilen Temperatur- und Viskositätsgradienten. Die Folge davon sind die oben erwähnten Inhomogenitäten im Bereich der Schweißnaht und die damit einhergehenden, die Lebensdauer stark beeinträchtigenden Fehlererscheinungen.

Demgegenüber lehrt die Erfindung eine Schweißnahtgeometrie, welche die Banddicke berücksichtigt und gewährleistet, daß beim Schweißen eine Menge an flüssiger Schmelze entsteht, die einen hinreichenden Konzentrationsausgleich gewährleistet. Dies gilt namentlich für die eine hohe Verschleißbeständigkeit gewährleistenden Karbidbildner und die daraus entstehenden Karbide.

Für das erfindungsgemäße Verfahren eignet sich das Laserschweißen in besonderem Maße, weil es zum einen mit Schutzgas, im allgemeinen Argon oder Helium, arbeitet und daher nicht nur eine Oxidation der Schmelze verhindert, sondern auch deren Entgasung fördert, was insbesondere bei höher legierten Schnellarbeitsstählen und pulvermetallurgisch hergestellten Stählen von besonderem Vorteil ist. Geeignet sind aber auch andere Schweißverfahren, insbesondere das Elektronenstrahl-Schweißen, wenn der Elektronenstrahl dabei so defocussiert wird, daß sich die für die erfindungsgemäße Schweißnahtgeometrie erforderliche Breite ergibt.

Als Schneidstahl kommen die folgenden Schneilarbeitsstähle infrage:

| DIN | AISI/SAE |
|---|---|
| -- | Matrix 2 |
| S 6-5-2 | M 2 |
| S 6-5-3 | M3 Typ 2 |
| S 2-10-1-8 | M 42 |
| S 10-4-3-10 | M 51 |

Der Schneidstahl enthält bis insgesamt 20% Wolfram, Molybdän, Vanadium und Niob; er kann jedoch im Rahmen der Erfindung auch höhere Gehalte an diesen Legierungsbestandteilen besitzen. Der Mindestgehalt sollte jedoch über 7% liegen.

Vorzugsweise enthält der Schneidstahl insgesamt mindestens 8% oder auch mindestens 12% Wolfram, Molybdän, Vanadium und Niob.

Das erfindungsgemäße Verfahren eignet sich insbesondere auch für eine Verwendung besonders verschleißbeständiger pulvermetallurgisch hergestellter Schnellstähle.

Der Sägeband- oder -blattrohling wird vor der formgebenden Bearbeitung vorzugsweise einem Spannungsarmglühen unterworfen. Nach dem Schränken wird das Sägeband oder - blatt normalerweise austenitisiert, abgeschreckt und sodann - gegebenenfalls mehrfach - angelassen.

Die Erfindung wird nachfolgend anhand von Ausführungsbeispielen und der Zeichnung des näheren erläutert. In der Zeichnung zeigen:

Fig. 1    die Seitenansicht eines Bimetall-Sägeblatts, teils als Rohling und teils im fertigen Zustand,

Fig. 2    eine Draufsicht auf die Zahnseite des Sägeblatts der Fig. 1,

Fig. 3    einen zum Teil bereits gestanzten Sägeblattrohling,

Fig. 4    eine Seitenansicht des Sägeblatts der Fig. 1 und

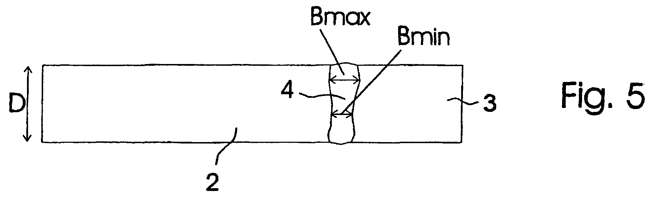

Fig. 5    eine schematische Querschnittsdarstellung im Bereich der Schweißnaht.

Der Schweißnahtrohling 1 besteht aus einem Trägerband 2 hoher Zähigkeit, insbesondere Biegewechselfestigkeit und einem Schneidstahlband 3, die über eine Schweißnaht 4 miteinander verbunden sind. Aus dem so entstehenden Rohband werden dann die Sägezähne 5 in der Weise herausgearbeitet, daß zumindest deren Spitzen 6 aus Schneidstahl bestehen. Die Sägezähne 5 werden sodann in einer Biegevorrichtung geschränkt. Die Schränkung beträgt dabei unter Berücksichtigung der Banddicke D

$$S = 2 \times D \text{ bis } 3 \times D.$$

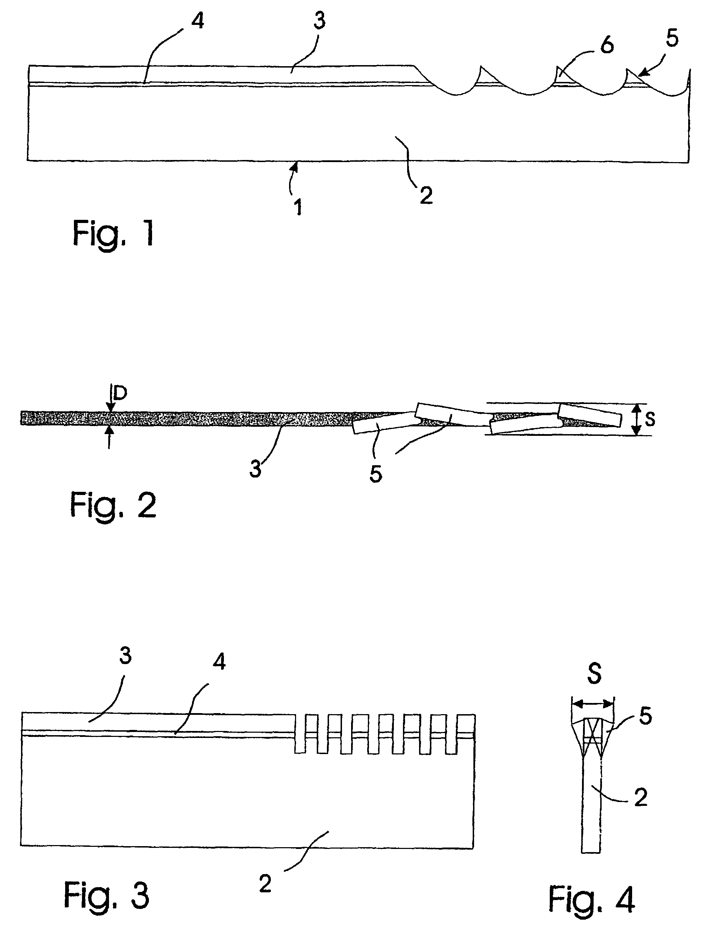

Die schematische Darstellung in Fig. 4 zeigt, wie die mittlere Schweißnahtbreite ermittelt wird, und zwar nach der Formel

$$B_m = (B_{max} - B_{min})/2.$$

Im Rahmen einer Versuchsreihe wurden unter Verwendung der aus der nachfolgenden Tabelle I ersichtlichen Trägerbandstähle und der aus der Tabelle II ersichtlichen Schneidstähle durch Laserschweißen zunächst Bimetall-Rohlinge hergestellt.

## Tabelle I

| Träger-band | C (%) | Si (%) | Mn (%) | Cr (%) | Mo (%) | Ni (%) | V (%) | W (%) |
|---|---|---|---|---|---|---|---|---|
| A 1 | 0,32 | 0,35 | 0,95 | 3,85 | 1,45 | 0,62 | 0,30 | 0,05 |
| A 2 | 0,58 | 0,50 | 0,70 | 4,10 | 0,50 | 0,20 | 0,02 | 0,02 |
| A 3 | 0,32 | 0,35 | 0,68 | 1,05 | 2,05 | 0,55 | 0,14 | 0,06 |
| A 4 | 0,30 | 0,22 | 0,40 | 3,90 | 2,50 | 0,45 | 0,20 | 0,05 |

## Tabelle II

| Schneid-stahl | C (%) | Cr (%) | Mo (%) | (V+Nb) (%) | W (%) | Co (%) | Fe* | Herstel-lung |
|---|---|---|---|---|---|---|---|---|

| B 1 | 0,90 | 4,4 | 5,0 | 1,9 | 6,4 | 0 | Rest | konv. |
|-----|------|-----|-----|-----|-----|------|------|-------|
| B 2 | 1,26 | 4,3 | 3,9 | 3,2 | 9,8 | 10,5 | Rest | konv. |
| B 3 | 1,55 | 4,0 | 6,2 | 4,0 | 8,0 | 8,2 | Rest | PM** |
| B 4 | 0,80 | 4,2 | 3,1 | 2,0 | 3,0 | 8,0 | Rest | PM** |

*Einschließlich erschmelzungsbedingter Verunreinigungen

*Beispiel 1*

Zum Herstellen der Bimetall-Rohlinge wurden die miteinander zu verschweißenden Werkstoffe mittels keramischer Führungen passgenau aneinandergefügt, fixiert und bei Normaldruck mittels Argon als Schutzgas in einer Menge von 8 l/min auf der Oberseite und von 4 l/min auf der Unterseite unter Verwendung eines ROFIN-$CO_2$-Lasers mit einer Leistung von 2,6 kW und einer Schweißgeschwindigkeit von 11 m/min geschweißt.

Nach dem Abkühlen auf Raumtemperatur war der Rohling völlig plan und zeigte im Randbereich lediglich schwache Anlauffarben.

*Beispiel 2*

Bei weiteren Versuchen kam ein Hochleistungs-Nd: YAG-Laser mit einer Brennweite von 100 mm zur Verwendung, der im Betriebsmode cw mit einer Leistung von 3,0 kW betrieben wurde. Dabei wurde die Focuslage so eingestellt, daß die erfindungsgemäße Schweißnahtgeometrie gewährleistet war. Beim Schweißen dienten Argon oder Helium in einer Menge von 9 l/min auf jeder Bandseite als Schutzgas. Bei diesem Versuch konnte die Schweißgeschwindigkeit auf 14 m/min erhöht werden; eine weitere Erhöhung der Schweißgewindigkeit ließ die beim Schweißen verwendete Vorrichtung nicht zu.

*Beispiel 3*

Zum Vergleich wurden aus drei Werkstoffkombinationen unter den Bedingungen der Beispiele 1 und 2, jedoch durch Elektronenstrahlschweißen Bimetall-Rohlinge hergestellt. Die Kanten der miteinander zu verschweißenden Bänder wurden mit einem organischen Lösungsmittel sorgfältig gereinigt. Anschließend wurden die beiden Bänder in einem Vakuum von $10^{-3}$mbar bei einer Schweißgeschwindigkeit von 10 m/min und einer Beschleunigungsspannung von 150 kV miteinander verschweißt.

Nach dem Schweißen wurden die Rohlinge zunächst einem Entspannungsglühen unterworfen und sodann entsprechend der Darstellung in Fig. 3 gestanzt und anschließend in der aus den Fig. 2 und 4 ersichtlichen Weise geschränkt.

Nach dem Schränken wurden die Proben austenitisiert und bei 560°C zweimal angelassen. Um die Formstabilität der Proben zu bestimmen, wurde nach dem Anlassen und Abkühlen die Schränkung nochmals bestimmt und als Anzeichen für die Formstabilität der Wert Δ S/S ermittelt. Dabei sind kleine Werte ein Anzeichen für eine hohe Formstabilität bzw. einen geringen Verzug.

Die Daten der Versuche sind in der Tabelle III zusammengestellt; deren Proben 1 bis 4 und 8 bis 11 fallen, wie sich aus der jeweils angegebenen bezogenen Schweißnahtbreite Bm ergibt, unter die Erfindung, während es sich bei den übrigen Proben um Vergleichsproben handelt. Die Daten der Tabelle III zeigen, daß sich die erfindungsgemäßen Proben durch eine hohe Formstabilität und Porenfreiheit auszeichnen.

**Patentansprüche**

1.    Verfahren zum Herstellen von Sägebändern und Sägeblättern mit verbesserter Formbeständigkeit und Schränkstabilität, bei dem

-    ein Trägerband aus einem zähen Stahl und

-    ein Schneidstahlband aus einem Schnellarbeitsstahl

- miteinander verschweißt und dabei die Schweißnaht auf ein Verhältnis ihrer mittleren Breite Bm zur Band- oder Blattdicke D von

$$B_m/D = 0{,}30 \text{ bis } 0{,}9$$

eingestellt wird.

2. Verfahren nach Anspruch 1, **gekennzeichnet durch** die Verwendung eines Trägerbandes aus einem Stahl mit 0,2 bis 0,6% Kohlenstoff, 0,5 bis 6,0% Chrom und bis 3,5% Wolfram, Molybdän, Vanadium und Niob einzeln oder nebeneinander.

3. Verfahren nach Anspruch 2, **gekennzeichnet durch** die Verwendung eines Trägerbandstahls mit 0,32% Kohlenstoff, 0,35% Silizium, 0,70% Mangan, 1,00% Chrom, 2,00% Molybdän, 0,6% Nickel, 0,15% Vanadium und 0,05% Wolfram, Rest Eisen.

4. Verfahren nach Anspruch 2, **gekennzeichnet durch** die Verwendung eines Trägerbandes aus einem Stahl mit mindestens 0,4% Kohlenstoff.

5. Verfahren nach Anspruch 2 oder 4, **gekennzeichnet durch** die Verwendung eines Stahls mit einem Kohlenstoffgehalt von 0,45 bis 0,55%.

6. Verfahren nach einem der Patentansprüche 1 bis 5, **gekennzeichnet durch** die Verwendung eines Schnellarbeitsstahls mit über 7% Wolfram, Molybdän, Vanadium und Niob.

7. Verfahren nach Anspruch 6, **gekennzeichnet durch** die Verwendung eines pulvermetallurgisch hergestellten Schnellarbeitsstahls.

8. Sägeband oder -blatt mit einem Trägerteil aus zähem Stahl und einem Schneidteil aus einem Schnellarbeitsstahl mit einer Schweißnaht, bei der das Verhältnis ihrer mittleren Breite Bm zur Band- oder Blattdicke D

$$B_m/D = 0{,}30 \text{ bis } 0{,}9$$

beträgt.

9. Sägeband oder -blatt nach Anspruch 8, **gekennzeichnet durch** einen Trägerteil aus einem Stahl mit 0,2 bis 0,6% Kohlenstoff, 0,5 bis 6,0% Chrom und bis 3,5% Wolfram, Molybdän, Vanadium und Niob einzeln oder nebeneinander.

10. Sägeband oder -blatt nach Anspruch 9, **gekennzeichnet durch** ein Trägerteil aus einem Stahl mit 0,45 bis 0,55% Kohlenstoff.


**Claims**

1. Process for manufacturing saw blades for bandsaws and other saws with improved dimensional and saw set stability where

   - a carrier blade produced from toughened steel and
   - a cutter steel blade produced from high-speed steel
   - are welded together whereby the extent of the weld is determined by a ratio of its average width $B_m$ to the blade thickness D of

$$B_m/D = 0.30 \text{ to } 0.9$$

2. Process according to claim 1, **characterised in that** a carrier blade produced from steel with a content of 0.2 to 0.6 % carbon, 0.5 to 6.0 % chromium and up to 3.5 % tungsten carbide, molybdenum, vanadium and niobium individually or in combination is used.

**3.** Process according to claim 2, **characterised in that** a carrier blade made from steel of the following composition is used: 0.32 % carbon, 0.35 % silicon, 0.70 % manganese, 1.00 % chromium, 2.0 % molybdenum, 0.6 % nickel, 0.15 % vanadium and 0.05 % tungsten with iron as the remainder.

**4.** Process according to claim 2, **characterised in that** a carrier blade made from a steel with at least 0.4 % carbon content is used.

**5.** Process according to claim 2 or 4, **characterised in that** steel with a carbon content of 0.45 to 0.55 % is used.

**6.** Process according to one of claims 1 to 5, **characterised in that** a high-speed steel with a content of more than 7 % tungsten, molybdenum, vanadium and niobium is used.

**7.** Process according to claim 6, **characterised in that** a high-speed steel is used which has been produced by means of a powder-metallurgical process.

**8.** Bandsaw or other type of saw blade with a carrier component made from toughened steel and a cutting component made from high-speed steel with a weld, which has the ratio of

$$B_m/D = 0.30 \text{ to } 0.9$$

between its average width $B_m$ and its blade thickness D.

**9.** Bandsaw or other type of saw blade according to claim 8, **characterised in that** the carrier component is made from a steel with a composition of 0.2 to 0.6 % carbon, 0.5 to 6.0 % chromium and up to 3.5 % tungsten, molybdenum, vanadium and niobium, individually or in combination.

**10.** Bandsaw or other type of saw blade according to claim 9,**characterised in that** a carrier component is made from steel with a content of 0.45 to 0.55 % carbon.

**Revendications**

**1.** Procédé de production de rubans de scie et de lames de scie présentant une résistance à la déformation et une stabilité à l'avoyage améliorées, dans lequel

- un ruban de support en acier écroui et
- un ruban d'outil de coupe réalisé à partir d'un acier à coupe rapide sont soudés ensemble et la soudure est à cet égard ajustée à un rapport entre largeur moyenne Bm et épaisseur de ruban ou de lame D, de $B_m/D = 0,30$ à 0,9.

**2.** Procédé selon la revendication 1, **caractérisé par** l'utilisation d'un ruban de support réalisé dans un acier comportant 0,2 à 0,6 % de carbone, 0,5 à 6,0% de chrome et jusqu'à 3,5% de tungstène, de molybdène, de vanadium et de niobium séparément ou conjointement.

**3.** Procédé selon la revendication 2, **caractérisé par** l'utilisation d'un acier de ruban de support comportant 0,32 % de carbone, 0,35 % de silicium, 0,70 % de manganèse, 1,00 % de chrome, 2,00 % de molybdène, 0,6 % de nickel, 0,15 % de vanadium et 0,05 % de tungstène, le reste de fer.

**4.** Procédé selon la revendication 2, **caractérisé par** l'utilisation d'un ruban de support réalisé dans un acier comportant au moins 0,4 % de carbone.

**5.** Procédé selon la revendication 2 ou 4, **caractérisé par** l'utilisation d'un acier présentant une teneur en carbone comprise entre 0,45 et 0,55 %.

EP 1 035 942 B1

6. Procédé selon l'une des revendications 1 à 5, **caractérisé par** l'utilisation d'un acier à coupe rapide comportant plus de 7% de tungstène, de molybdène, de vanadium et de niobium.

7. Procédé selon la revendication 6, **caractérisé par** l'utilisation d'un acier à coupe rapide fabriqué par un procédé de métallurgie des poudres.

8. Ruban de scie ou lame de scie présentant un élément de support réalisé à partir d'acier écroui et un élément de coupe réalisé à partir d'un acier à coupe rapide avec soudure, dans lequel le rapport entre sa largeur moyenne Bm et épaisseur de ruban ou de lame D est égal à $B_m/D = 0{,}30$ à $0{,}9$.

9. Ruban de scie ou lame de scie selon la revendication 8, **caractérisé par** un élément de support composé d'un acier comportant 0,2 à 0,6 % de carbone, 0,5 à 6,0 % de chrome et jusqu'à 3,5 % de tungstène, molybdène, vanadium et niobium séparément ou conjointement.

10. Ruban de scie ou lame de scie selon la revendication 9, **caractérisé par** un élément de support réalisé à partir d'acier comportant 0,45 à 0,55 % de carbone.

Fig. 1

Fig. 2

Fig. 3

Fig. 4

Fig. 5